# EUROPEAN PATENT APPLICATION

(11) **EP 4 789 521 A1**
(43) Date of publication of application: **12.08.2026**
(21) Application number: 24874376.7
(22) Date of filing: 22.08.2024
(51) Int. Cl.: A01B 69/00, A01B 39/06, A01G 7/00, A01M 7/00, A01M 19/00, A01M 21/02, A01M 29/00, A01M 29/16

(54) **WORK VEHICLE**

(30) Priority: 03.10.2023 JP 2023172182
(71) Applicant: Iseki & Co., Ltd., Matsuyama-shi, Ehime 799-2655 (JP)
(72) Inventor: TANAKA, Seiji, Iyo-gun, Ehime 791-2111 (JP); ONO, Koki, Iyo-gun, Ehime 791-2111 (JP); NISHINO, Eiji, Iyo-gun, Ehime 791-2111 (JP)
(74) Representative: TBK
(86) International application number: PCT/JP2024/029779
(87) International publication number: WO 2025/074762

(57) **Abstract**

**In** a work vehicle capable of detecting a difference between a reference image captured in advance by an imaging device and an image newly captured by the imaging device, both the reference image and the newly captured image are captured at the same place in a field and oriented toward the same direction. A portion of the work vehicle is captured in both the reference image and the newly captured image. A reference part of the work vehicle captured in the image is set, the respective reference parts of the reference image and the newly captured image are overlaid, and a correction process is performed for matching a scale of a size, an inclination, and a hue of the work vehicle captured in the images. This enables the detection of a difference between the reference image and the newly captured image. As a result, images are captured under conditions that facilitate matching, and since there is a reference for confirming coincidence even in subsequent image data matching, it is possible to extract a changed part with high accuracy.

## Description

### TECHNICAL FIELD

The present invention relates to a work vehicle that analyzes a difference between a reference image and a new image using an imaging device, and performs driving in a pre-registered work mode or safety response.

### BACKGROUND ART

In the related art, there is a system that performs image matching of footprints of harmful animals and manages information related to the image (Patent Document 1).

### PRIOR ART DOCUMENT

### PATENT DOCUMENT

Patent Document 1: Japanese Patent No. 7322775

### SUMMARY OF INVENTION

### TECHNICAL PROBLEM

Since the related art focuses on matching and aligning captured data, the matching accuracy is high. In addition, in order to match image data, imaging condition regulations for acquiring images are necessary, but detailed descriptions thereof are not provided.

An object of the present invention is to provide a work vehicle capable of analyzing correlation between various types of data and performing anomaly avoidance and defect detection by regulating imaging conditions for comparison and utilizing a matching function based on artificial intelligence for data sets that cannot be easily matched.

### SOLUTION TO PROBLEM

The present invention is solved by the following technical means.

In a work vehicle capable of detecting a difference between a reference image captured in advance by an imaging device and an image newly captured by the imaging device, both the reference image and the newly captured image are captured at the same place in a field and oriented toward the same direction. A portion of the work vehicle is captured in both the reference image and the newly captured image. A reference part of the work vehicle captured in the image is set, the respective reference parts of the reference image and the newly captured image are overlaid, and a correction process is performed for matching a scale of a size and an inclination of the work vehicle captured in the images and a hue of the work vehicle captured in the images, thereby enabling detection of a difference between the reference image and the newly captured image.

### ADVANTAGEOUS EFFECTS OF INVENTION

According to the present invention, an image is captured under conditions that facilitate matching, and since there is a reference for confirming coincidence even in subsequent image data matching, it is possible to extract a changed part with high accuracy.

### BRIEF DESCRIPTION OF DRAWINGS

FIG. 1 is a diagram of a reference image during tilling work of the present invention.
FIG. 2 is a diagram of a new image during tilling work of the present invention when imaging scales are different.
FIG. 3 is a diagram of a new image during tilling work of the present invention when a moving object is confirmed.
FIG. 4 is a diagram of a new image during tilling work of the present invention when a field state is different.
FIG. 5 is a diagram of a new image during tilling work of the present invention when an obstacle is confirmed.
FIG. 6 is a diagram of a reference image during pest control of the present invention.
FIG. 7 is a diagram of a new image during pest control of the present invention when damage to crops by pests is confirmed.
FIG. 8 is a diagram illustrating image processing analysis in a case of being eaten by pests of the present invention.
FIG. 9 is a diagram of a reference image in weeding work after rice planting of the present invention.
FIG. 10 is a diagram of a new image in weeding work after rice planting of the present invention when weeds or the like are confirmed.
FIG. 11 is a diagram illustrating that a movement amount of a moving object is calculated using a neural network using a reference image diagram and a new image diagram during tilling work of the present invention.
FIG. 12 is a diagram illustrating that matching is performed by performing correction of scale and inclination based on a work vehicle reference using a neural network in order to perform image matching using a reference image diagram and a new image diagram during tilling work of the present invention.
FIG. 13 is a configuration diagram of a dedicated machine for responding to moving objects of the present invention.
FIG. 14 is an equipment configuration diagram when utilizing the dedicated machine for responding to moving objects of the present invention.
FIG. 15 is a configuration diagram of a dedicated machine for responding to pests of the present invention.
FIG. 16 is a configuration diagram in pest control work of the dedicated machine for responding to pests of the present invention.
FIG. 17 is a configuration diagram of a dedicated machine for responding to weeding of the present invention.
FIG. 18 is a work diagram when controlled during manual operation of the dedicated machine for responding to weeding of the present invention.

### DESCRIPTION OF EMBODIMENTS

Hereinafter, the present invention will be described based on embodiments shown in the drawings.

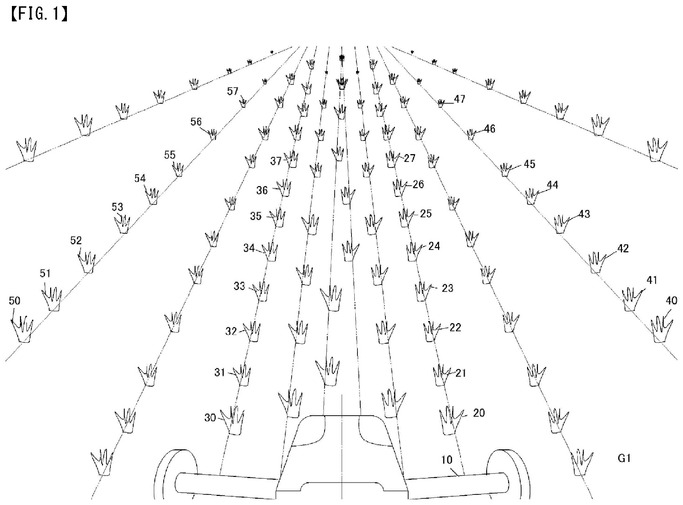

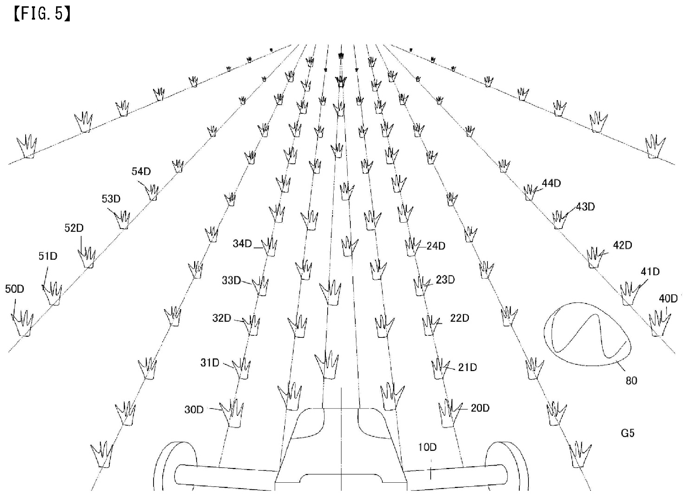

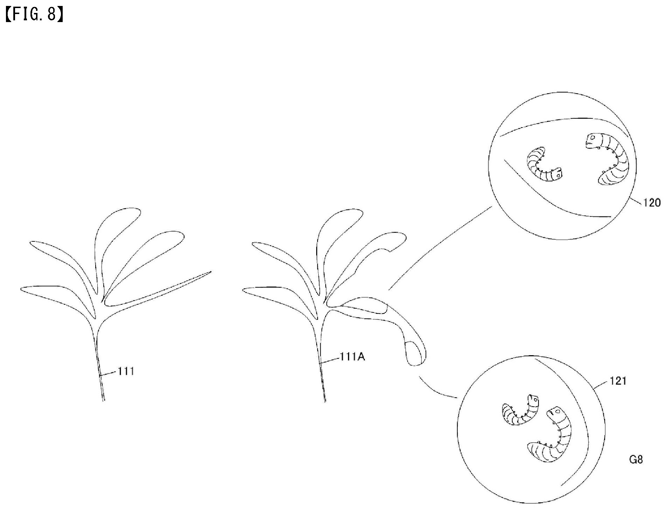

The work vehicle shown in FIGS. 1 to 18 illustrates an example of the present embodiment.

The work vehicle of the present invention will be described.

In the present invention, there are tractors, rice transplanters, combines, and management machines. Although each work machine has its own movement characteristics, a tractor will be described here as a representative model. Each work vehicle is capable of automatic driving and unmanned driving, and is equipped with a satellite positioning device and an inertial positioning device, and travels, steers, and operates work machines based on registered data. Regarding the base travel route, the field is the reference, and it is registered and managed by map data.

The background of the present invention will be described.

As automation progresses in agriculture, it is ideal for work vehicles to perform work automatically. However, agricultural work is not simply a repetition of the same task. In a vast field, various crops are cultivated, and there are differences in weather depending on the season, so reproducibility is not as high as in industrial production sites. In particular, although a field is personally managed land, it is not inside a building blocked from the outside, so moving objects can freely enter and exit. Creatures called harmful animals may enter the field because crops are convenient food. Similarly, humans may take interest in automated work vehicles and approach them.

There is a need to respond to such moving objects during work as risk factors, and this serves as an item utilized for safe driving response in automatic driving. In addition, automatic driving enables driving during hours when humans cannot respond, long-duration work, and repetitive driving. If this function and the analysis response of the imaging device can be combined, continuous response for exterminating pests and harmful animals is also possible. Furthermore, in weeding management of paddy fields, it would be labor-saving if the removal of weeds and weeding work could be performed simultaneously.

The first invention of the present invention will be described.

FIG. 1 is a diagram of a reference image during tilling work. The work vehicle is a tractor 10.

Imaging is performed so that the entire screen of the imaging device is in the state of FIG. 1. One important point is that when registering the capture of the reference image G1, the captured latitude and longitude must be registered, and the captured direction must be clarified. Regarding the direction of the imaging device, a digital camera is equipped with a device such as an infrared sensor so that the distance to a subject can be measured. The direction in which the lens of the imaging device is focused may be used, but the direction of this imaging device toward the subject is overlaid with the latitude and longitude, which is the position where the image was captured. Further, the imaging device has an angle in the height direction relative to the ground. Registration of the direction includes these angles, and the registration of the direction is defined by registering three directions: the latitude and longitude, which is the imaging direction from the registered position of the imaging device to the subject, and the imaging angle of the imaging device from the ground. Accordingly, in the same work vehicle, an image captured at the same place in a field and oriented toward the same direction is set as a reference image, and a reference in the imaging device for comparing a difference with a newly captured image at the same place in the field and oriented toward the same direction by the same work vehicle is determined.

By performing such work, a newly captured image is made into content that can be compared. In general image comparison, an imaging device and a subject are fixed with a jig, and imaging is performed by matching target points. Although arranging a subject at a predetermined position on the condition of such comparison is an easy method for image comparison, since a moving object entering a field does not move to a predetermined position by instruction, the imaging side must capture an image that matches with the reference image.

However, even if those conditions are known, comparison of the image G1 cannot be easily performed by this alone. The reason is that the imaging device is mounted on a moving work vehicle such as the tractor 10, and since the tractor 10 travels in a field, it does not behave like a car traveling on an asphalt road. Inclination occurs in the front, rear, left, and right directions of the work vehicle due to irregularities and softness of the field. Since this inclination occurs three-dimensionally, even if the image is captured at the same place in the field and oriented toward the same direction in the same work vehicle, the scale of the image may differ slightly when the three-dimensional inclination is corrected. If there is this difference in size, there is a possibility that even the same object is determined to be a different shape. Therefore, correction of the scale of this image is necessary. In addition, since inclination also occurs, correction of inclination is also necessary.

Furthermore, the present invention also performs matching based on hue. Even if the shape is the same, a difference in hue means a change. In the case of plants, it can be understood that growth differs between green and brown. Correction is performed so that the RGB of the colors, which are the hues, matches the hue of the work vehicle. A captured image may appear in a different color even for the same work vehicle color due to the angle of sunlight or the like when the captured time or season is different. Therefore, since the work vehicles shown in the reference image and the new image are the same, this difference in color is corrected so that the color of the work vehicle in the new image becomes the same as the color of the work vehicle in the reference image. By utilizing this hue correction for the entire image, it is possible to compare the hues of other parts in the field, thereby enabling comparison of shape and hue.

Regarding shadows generated by the angle of sunlight, although a filtering effect for erasing images by artificial intelligence is applied, the angle of sunlight is calculated from the captured date and time, and the movement of shadow generation positions and correction of hue are performed according to the angle of sunlight at the date and time of the reference image.

Reference numerals 20 to 57 in FIG. 1 are rice stubbles remaining in the field after harvesting by a combine. By matching the hues of the work vehicle, it becomes possible to confirm changes in the hue of the rice stubbles. If the reference image is immediately after rice harvesting and the new image is immediately after land leveling work, and the captured periods are different, it is possible to distinguish the difference in the images by hue even if the rice stubbles are in a similar shape range.

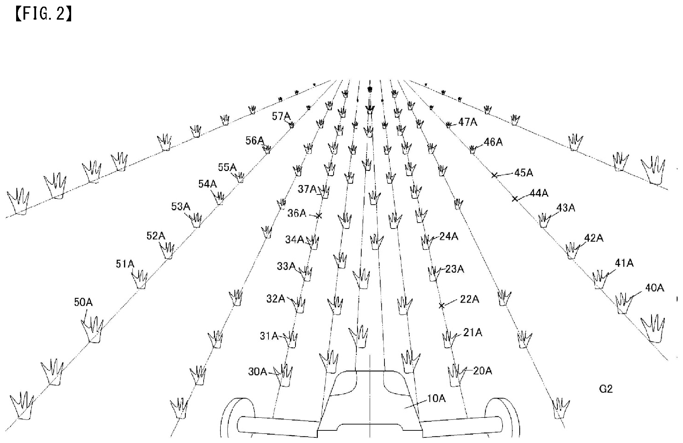

FIG. 2 shows a newly captured image during tilling work. As described above, this is an image in which a phenomenon occurs where the scale and inclination of the image are slightly different when the three-dimensional inclination is corrected. The difference between the image G1 in FIG. 1 and the image G2 in FIG. 2 illustrates the difficulty of comparing these captured images.

Thus, comparing sizes in an image is not easy. For example, assume that LiDAR (Light Detection and Ranging) is deployed. LiDAR is one of remote sensing technologies using light, and it is possible to analyze the shape and properties of an object by measuring scattered light relative to laser irradiation emitted in pulses. Although it also makes it possible to measure the distance to an object, while it is effective in individual data analysis, in comparison between captured image data sets, the images are calculated in dots or polygon shapes, and determination of shapes with minute roundness is difficult to compare numerically. Rather, it is possible to respond with better accuracy by simply performing image comparison between image data sets and analyzing the shapes of a certain region using a convolutional neural network.

Therefore, work to align the scale and inclination of the images must be performed, but this reference becomes a problem. In a work vehicle that is constantly moving within a field, it is difficult to find a reference within the field.

Therefore, in the present invention, a portion of the work vehicle is included in the image captured by the imaging device. Since the work vehicle is the same object, for example, if an imaging device is provided inside a cabin of the work vehicle, three-dimensional distance matching is possible from the width and length of the hood of the work vehicle, the wheel track and position of the front wheels, or the size of a window frame of the cabin (not illustrated). However, since it is difficult to achieve a perfect match in all directions without any difference, a tolerance is provided for each direction, and a process is performed to assume that matching has been achieved for differences within that range, thereby providing immediacy of response.

By performing a process of overlaying a portion of the work vehicle included in the image and matching the scale of the size and the inclination of the work vehicle, comparison between the reference image and the new image becomes possible in a response that enables detection of a change between the reference image and the newly captured image. A difference in the image is determined as a different situation in unmanned driving of a robot work vehicle or the like, enabling a response corresponding to a human's criteria for comparison where the state is different from the usual time based on experience.

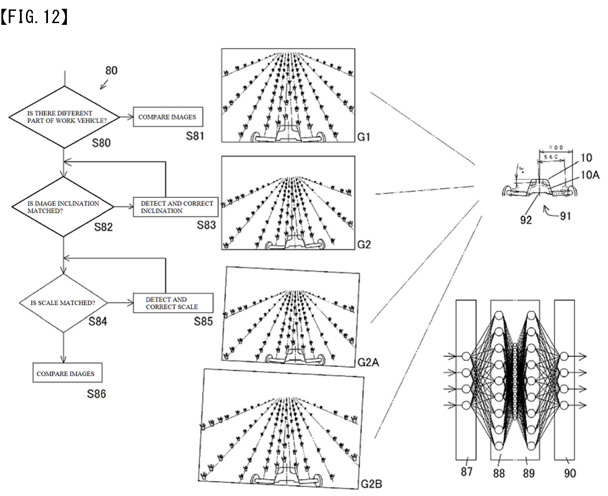

The relationship of performing the process of matching the scale of the size and the inclination of this work vehicle will be described with reference to FIG. 12. The image G1 in FIG. 1 is a reference image, and the image G2 in FIG. 2 is a newly captured image. As described above, it can be seen that the image G2 has a different image scale and inclination compared to the image G1. If the images are simply combined and compared as they are, the size of the field, the size of the rice stubbles after harvesting, and the pitch of the stubbles will differ, and it will be detected that there are different parts in each region.

Therefore, as described above, a reference for correcting scale and inclination is calculated by capturing a portion of the work vehicle in the image. Image 91 is a diagram in which the tractor 10 (solid line) of image G1 and the tractor 10A (two-dot chain line) of image G2 are overlaid. Since this tractor 10 and tractor 10A are the same, the difference in the scale and inclination of the images is detected by detecting this difference.

First, a reference part of the tractor 10 must be registered. In the embodiment, a meter panel position 92 of the tractor 10 is used as the reference part. By matching this image 91, matching of both is performed centering on contour parts in the shape of the image. An image is expressed as a collection of dots of a certain size, and a means for calculating a movement amount for matching a displacement amount of contour parts and a calculation for performing color matching of each dot are performed using a convolutional neural network.

Accordingly, in image 91, it is detected that the image of tractor 10, 10A was inclined to the left by 3 degrees and the scale was 80% (560 mm / 700 mm) compared to the image of tractor 10.

Explaining with the matching flowchart 80, if there is a difference in the work vehicle in S80, inclination matching in S82 is performed. Thereafter, scale matching is performed in S84, and image comparison in S86 is entered.

By this image processing, image G2 is corrected so as to be inclined to the right by 3 degrees and corrected to image G2A. Thereafter, an enlargement correction of 125% (700 mm / 560 mm) is made in image G2B, and by comparing image G1 and image G2B, a change between the reference image and the newly captured image is enabled to be detected.

By such image matching, it becomes possible to detect changes in the field. As an embodiment, the difference between the image G1 in FIG. 1 and the image G2 in FIG. 2 will be described. In image G2 of FIG. 2, it can be seen that the rice stubbles of 22A, 36A, 44A, and 45A are missing. In this way, differences in the field are detected. However, since rice stubbles do not pose a problem for work, it is possible to prevent them from being detected by a filtering function if the shape of rice stubbles is pre-registered to be excluded from detection.

Regarding such image filtering functions and detection of specific images, approximate shapes can be detected quickly and with high accuracy by utilizing artificial intelligence. Data 87 in FIG. 12 decomposes detection images from image G2B into each area and inputs information on various objects based on colors and image contours. Weights of the relationships of data 87 are assigned in data 88, objects that can be inferred are assumed in data 89, and a specified object is output by data 90. That is, an object captured in the image can be identified (output data) by capturing an image and other measurement data (input data). For humans, it is easy to infer an object shape from a captured image and judge a corresponding object based on memory, but this is difficult for a machine, so identification is performed using artificial intelligence.

The output of the artificial intelligence is used not only for identifying objects but also for determining differences in images, and in image comparison processing, identification of objects in parts where changes have occurred and factor analysis can also be performed.

The second invention of the present invention will be described.

In the detection of a change between the reference image and the newly captured image described above, if there is a change in size of a predetermined range or more, a part of the change is set as a specific part, the work vehicle is stopped, continuous imaging is performed, and if movement is confirmed in the specific part, a determination to be a moving object is made, and a pre-set moving object avoidance mode is entered.

First, even for a moving object, if it is palm-sized, it is a small bird or a small animal, and compared to the size of the work vehicle, it may flee when the work vehicle approaches, so it can be an excluded moving object. However, if it is larger than the size of both hands, it becomes the size of a dog, cat, wild boar, weasel, or the like. Moreover, a size about that of a human child is serious, and if there is a change in size of a predetermined range or more, the part where the change occurred is set as a specific part, and analysis is performed by continuous imaging.

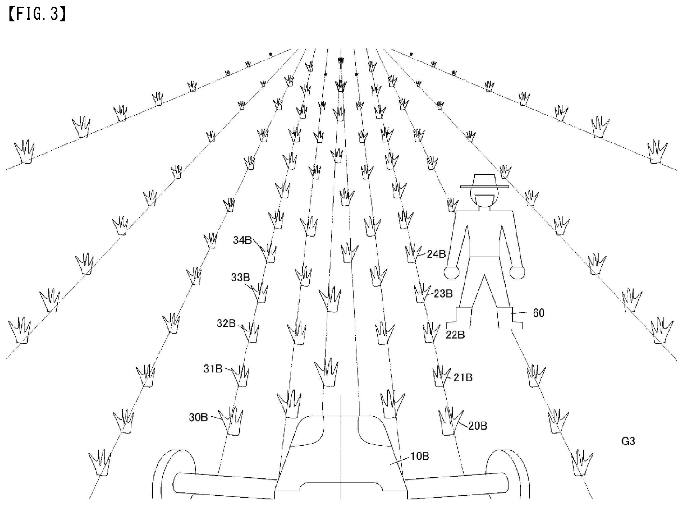

Image G3 in FIG. 3 is a diagram in which an object 60 of a size equal to or larger than what can be determined as an obstacle is detected in a newly captured image. The reference image for this is image G1 in FIG. 1. Here, the scale and inclination of the images are the same, and correction is not mentioned, but the same work as in the first invention is performed.

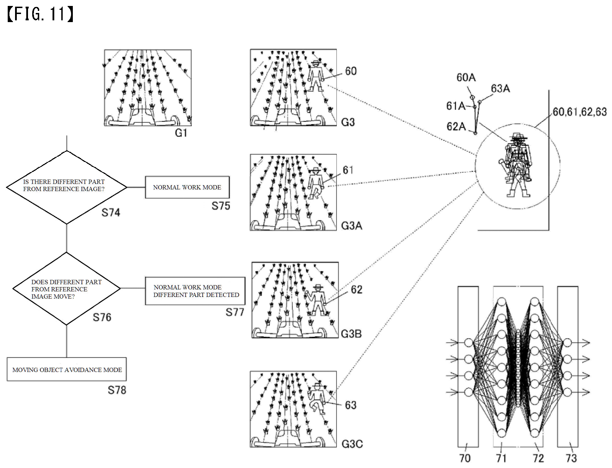

How to analyze that it is a moving object will be described with reference to FIG. 11. This diagram illustrates calculating the movement amount of a moving object using a neural network with a reference image diagram and a new image diagram during tilling work.

The diagram labeled G1 is a reference image during tilling work. Diagram G3 is the image captured this time. In image G3, it can be seen that object 60 is different compared to image G1. In this case, the work vehicle performs an emergency stop. An emergency stop is performed to increase the accuracy of imaging and, above all, to prevent a moving object from approaching and causing damage.

Image G3A is an image captured after the emergency stop, and it can be seen that object 60 is detected as moving as object 61 and the shape is also different. Accordingly, object 60 is recognized as a moving object. Furthermore, in image G3B, it is judged that object 62 is approaching the work vehicle further.

In this way, if movement of an object of a predetermined size or larger is confirmed, the moving object avoidance mode is entered. As the moving object avoidance mode, not only the travel of the work vehicle is stopped, but the work machine itself also stops its work. In the case of a robot work machine, a response of locking the operator's seat is performed. Furthermore, there are cases where intimidation using sound is performed or a warning is given by speech. Also, danger can be indicated by performing a flashing response using a lighting device. In addition, data communication is performed to transmit the captured image to a user to confirm whether there is a misrecognition. A judgment for restarting operation is performed according to an instruction from the user.

Thus, by the moving object avoidance mode, if the moving object is a living creature, a dangerous state may be avoided. Although the case of a human is described in the embodiment, it is confirmed that the person turns their back to the work vehicle and moves away as in image G3C.

That object 60 of image G3, object 61 of image G3A, object 62 of image G3B, and object 63 of image G3C are the same object can be judged using a neural network. Data 70 matches captured data of images G1 to G3C and data held by the work vehicle with registered data. Input and output of data are the same as the content described in FIG. 12.

Data 70 in FIG. 11 decomposes images from images G1 to G3C into each area and inputs information on various objects based on colors and image contours. Weights of the relationships of data 70 are assigned in data 71, objects that can be inferred are assumed in data 72, and a specified object is output by data 73. That is, an object captured in the image can be identified (output data) by capturing an image and other measurement data (input data). For humans, it is easy to infer an object shape from a captured image and judge a corresponding object based on memory, but this is difficult for a machine, so identification is performed using artificial intelligence.

The output of the artificial intelligence is used not only for identifying objects but also for determining differences in images, and in image comparison processing, identification of objects in parts where changes have occurred and factor analysis can also be performed.

Although the object was judged as a moving object this time, in the analysis method, if similar matching for a human-shaped object is achieved, position detection is performed with a face position 60A as a point. When each image is combined, it is confirmed that the face position moves as face position 60A, face position 61A, face position 62A, and face position 63A. From the distance per unit time of this movement, variation in movement direction changes, and synthesis of images 60, 61, 62, and 63, if shape change of image contours and movement are confirmed, it is judged to be a living creature with a high possibility of being a human.

Even if it is not judged to be a human image contour, detection criteria for a moving object are established, and if that part shows a flow line such as face position 60A, face position 61A, face position 62A, and face position 63A, the flow line of this reference position is confirmed and judgment of a moving object is performed.

Based on the movement of this flow line, it is also judged whether it is a moving object or a living creature other than a human. Those with irregular movement amounts per unit time or irregular change directions are judged to be living creatures. In particular, if there is a change in the vertical direction of the flow line position used as a reference, it can be judged that it is not a moving object such as a work vehicle. In addition, by confirming changes in movement when sound is generated from the work vehicle for a warning, it is possible to judge whether a living creature is a human or another living creature. For example, if a voice message such as "It's dangerous. Please stay away." is generated from the work vehicle, it is assumed that if it is a human, there will be a change in action, and this is used as a judgment criterion.

Such image analysis judgment is also performed from the input of data 70 to the output of data 73. That is, from captured image data, it is possible to judge a phenomenon where a human approaches a work vehicle in a field.

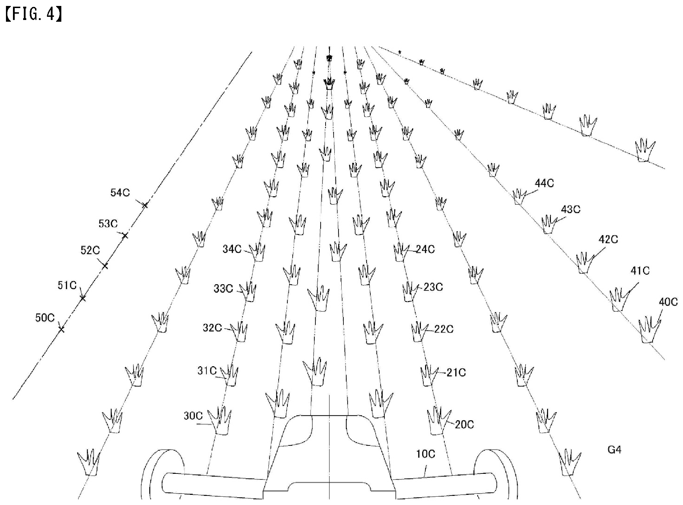

A flow for entering the moving object avoidance mode is simply described in S74 to S78, and the moving object avoidance mode S78 is entered according to S76 as to whether a different part moves. In a case such as image G4 in FIG. 4, the moving object avoidance mode is not entered, and detection S77 of a part different from the normal work mode is selected.

An example of this is shown in image G4. Compared with image G1, which is the reference image, rice stubbles 20C to 44C were matched, but movement of objects was not confirmed. Also, cases such as a state where left rice stubbles 50C to 54C are not detected correspond to this.

As another example, image G5 is shown. Here, object 80 is detected as a different part. This time, it is a case where something has increased. In this case, what kind of object object 80 is is analyzed through a neural network. Since information on foreign matter found in fields has been accumulated from much experience, there are generally comparison images. Image data of stones, cardboard boxes, plastic boxes, umbrellas, nylon bags, wrapping paper, magazines, newspapers, tools, and the like are registered, and matching is performed based on similar shapes and hues. Also, data of living creatures such as humans, dogs, cats, weasels, and mice are registered.

However, there are classifications of foreign matter, and they are classified by subsequent operation response methods, such as a case where there is an obstacle to work and operation is not possible without removing the foreign matter, a case where conditional operation is possible, a case where normal operation is possible, and a mode for entering the moving object avoidance mode S78 described above.

Criteria for such classification of foreign matter need to be improved by a learning function. For that purpose, in the detection of changes between the reference image and the newly captured image, image synthesis processing, work vehicle data, and map data are used as input data, and data of changed parts of images are learned by utilizing a neural network so as to output a correlation as a method for subsequently controlling automatic driving.

The third invention of the present invention will be described.

In the detection of a change between the reference image and the newly captured image, imaging is set to a growth part of crops, and if a change in hue is confirmed in this range, a pre-set pest response mode is entered.

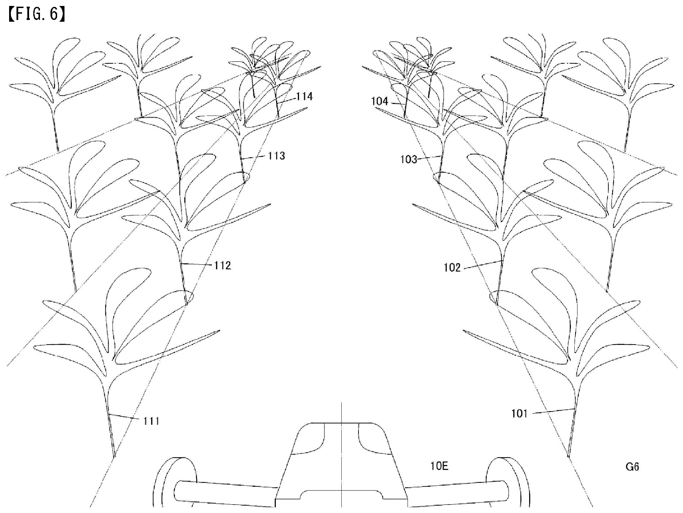

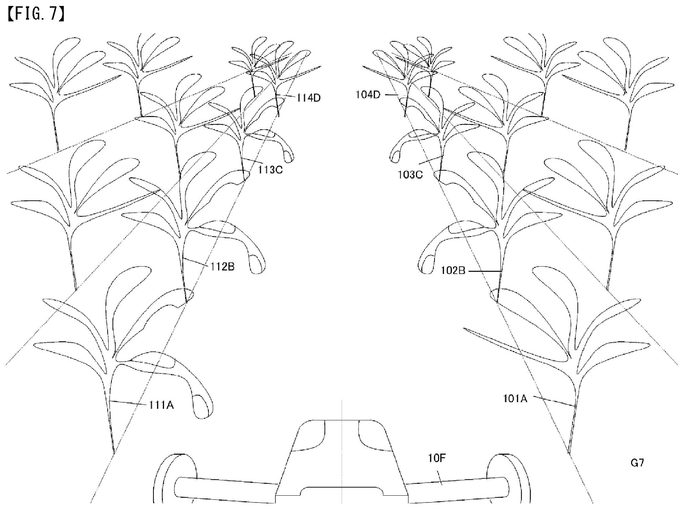

Image G6 in FIG. 6 is a reference image, and image G7 in FIG. 7 is a newly captured diagram. Comparing them, changes are seen in plant 102B, plant 103C, plant 111A, plant 112B, and plant 113C of image G7. This change primarily consists of detecting differences in color rather than changes in shape.

When plant 111 becomes plant 111A, if part 120 and part 121 where the change was detected are analyzed in enlargement, pests are discovered and the color is also different. When such detection is performed, a response is made to perform disinfection centered on the corresponding part. Although disinfection is performed in the pest response mode, pest damage has occurred, so the position of the corresponding plant is registered, and the position is registered on a map so that it is excluded and harvested when harvesting crops.

The fourth invention of the present invention will be described.

In the detection of a change between the reference image and the newly captured image, imaging is set to a water surface of a paddy field, and if a change in hue or a change in shape is confirmed in this range, a pre-set weeding response mode is entered.

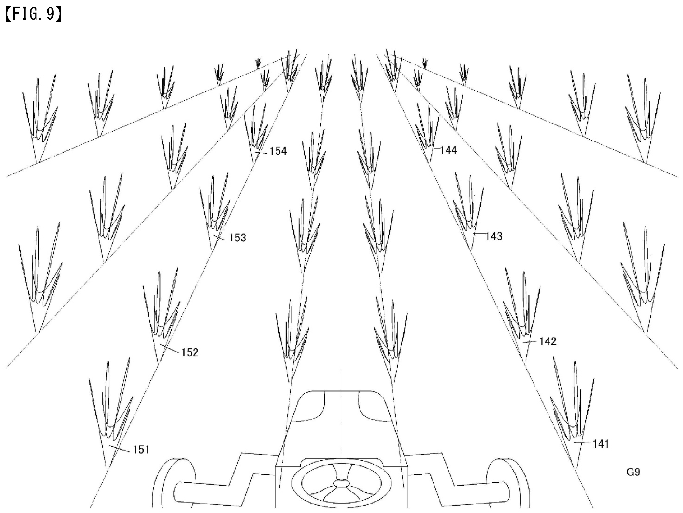

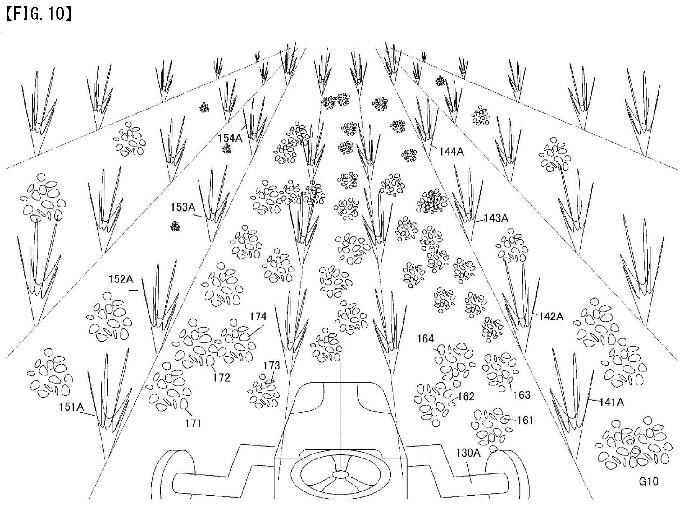

Image G9 in FIG. 9 is a reference image, and image G10 in FIG. 10 is a new image. Both of these images are from a period when rice planting has finished and paddy field management is performed. This period is a time when weeds occur in paddy fields. Weeds include Monochoria vaginalis, Eleocharis kuroguwai, barnyard grass, and the like. If left unattended, weeds 161 to 174 spread over the entire water channel part between rice plants 141A to 154A as in image G10. Although this image shows a state where weeds have grown considerably, if weeds are detected by image comparison, weed capture work is immediately performed, and also, by making the water of the paddy field muddy, sunlight to the field surface in the region between rice plants is blocked, thereby performing weed prevention response. This response is the weeding response mode.

The core of image determination in the third and fourth inventions is color determination. The reference image and the new image are overlaid, and detection is performed focusing on whether there is a difference in hue in a specific part. Hue is judged by degrees of three primary colors. A reference color for each position is registered in the neural network, and if an area difference of a hue different from this hue exceeds a predetermined value, an anomaly is detected. However, in both image G7 and image G10, changes are small at initial stages and determination is difficult. Therefore, it is also good to use a neural network so as to comprehensively compare and judge shape change and color change.

The second, third, and fourth inventions of the present invention are ways of responding when an anomaly determination in an image is detected, and more accurate response becomes possible by launching and responding with a dedicated work vehicle other than the tractor 10 used as a representative model in the present invention.

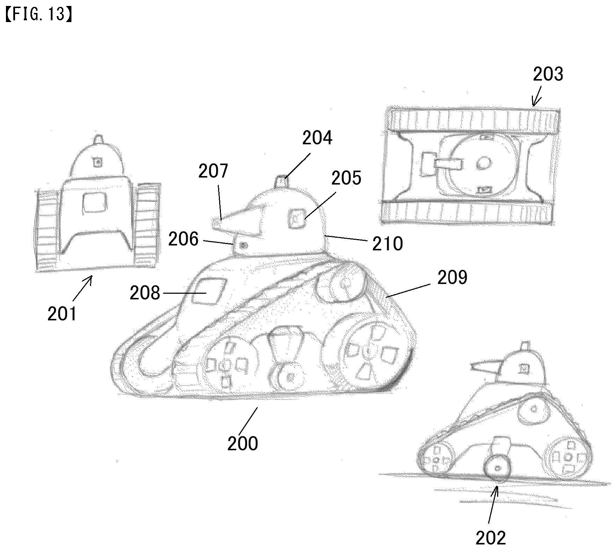

Regarding the moving object avoidance mode of the second invention, it will be described with reference to FIG. 13. A dedicated machine for responding to moving objects 200 is a dedicated machine used in the moving object avoidance mode. It enables automatic travel by a satellite positioning device 204. It is equipped with a water gun 207, from which water is fired like bullets to check the situation by targeting a moving object. If it is an animal, it is considered that it will retreat, which is the main response of the moving object avoidance mode. An imaging device 206 consists of LiDAR and a CCD camera, detects shapes and distances from captured images, and performs estimation of moving objects. Since it is equipped with crawlers 209, travel on a certain level of undulating ground is possible. By rotating a head 210, a light 205 is swung to emit light, thereby intimidating moving objects and also serving as a warning signal for surrounding residents. Front view 201, top view 203, and side view 202 are shown.

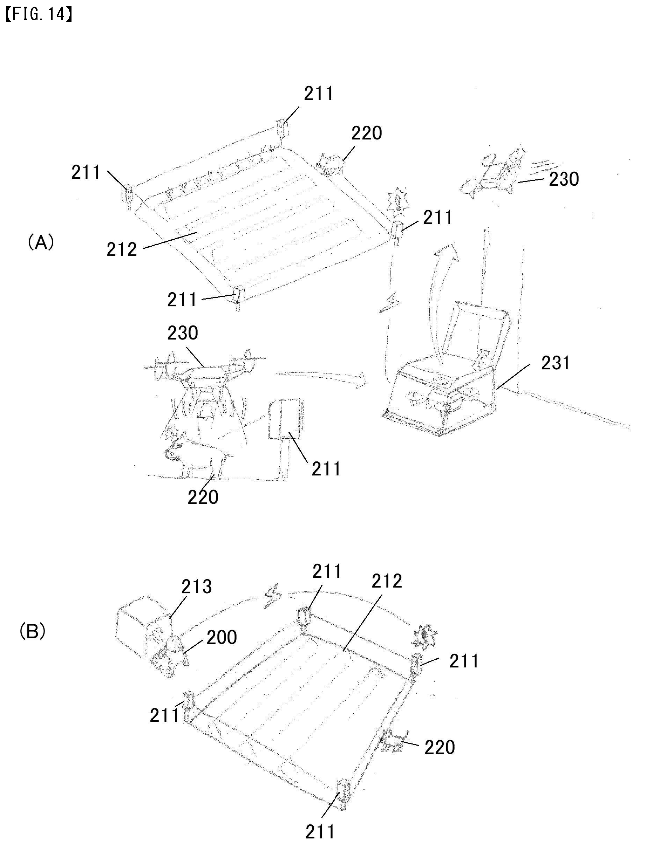

FIG. 14(B) shows another form of use where an imaging device 211 is provided at a corner of a field, and when intrusion of a moving object 220 into a field 212 is confirmed, the dedicated machine for responding to moving objects 200 is dispatched from a warehouse 213.

Also, FIG. 14(A) shows one using a drone 230 instead of the dedicated machine for responding to moving objects 200. Similarly, when intrusion of a moving object 220 into the field 212 is confirmed, the drone 230 is dispatched from a warehouse/charger 231. The drone 230 is a system that emits sound and drives away the moving object 220.

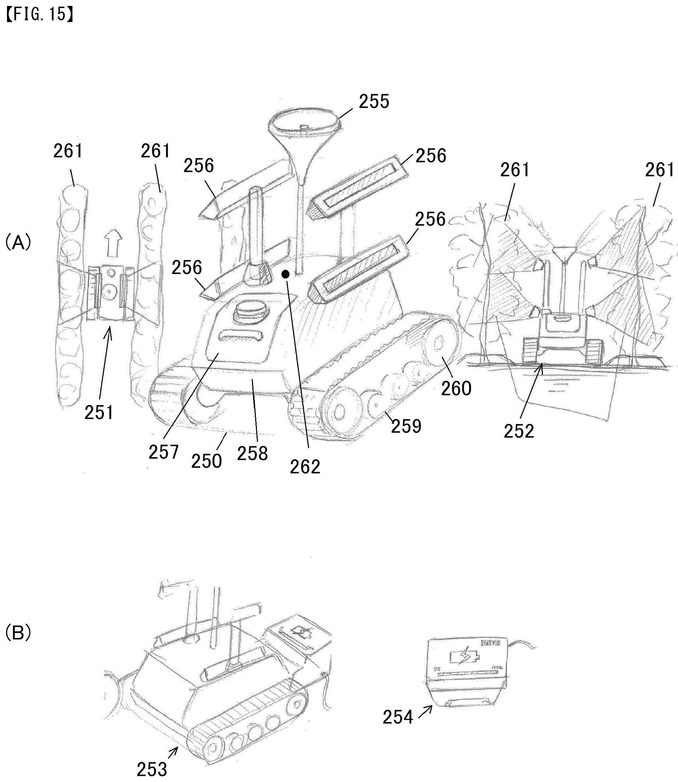

Regarding the pest response mode of the third invention, it will be described with reference to FIG. 15. A top view of a dedicated machine for responding to pests 250 is 251, and a front view 252 is a diagram during spraying. A diagram during charging 253 shows a connection state with a charger 254.

The dedicated machine for responding to pests 250 enables automatic travel by a satellite positioning device 262. A traveling part can travel with wheels 260 and crawlers 259, a main body is equipped with a disinfectant tank 257, and a charger and a battery part 258 are placed below. It is equipped with a spraying device 255 at an upper part, from which disinfectant is fired in a mist to target parts where pests have occurred in plants 261, thereby responding. It is linked with images captured by the tractor 10, confirming the positions of plants where pests have occurred by latitude and longitude, also confirming ground height from images, confirming target positions, and taking a response of increasing the spray amount at these positions.

It is also possible to equip an ultraviolet lamp 256 and take a response of irradiation simultaneously with the spraying of disinfectant. The ultraviolet lamp 256 presumes that eggs were laid in the presence of pests, and performs prevention of hatching and egg removal response.

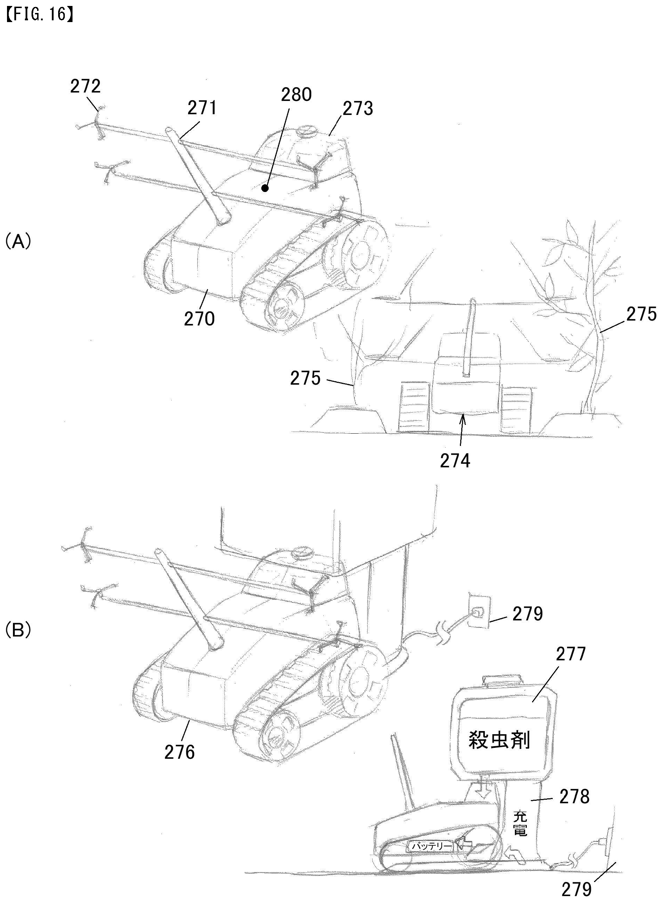

A dedicated machine for responding to pests 270 in FIG. 16 is for responding to high-stature plant crops 275. It also performs spraying of moisture in addition to disinfection, and is equipped with piping 271 and a nozzle 272 for high-place response. A tank 273 is provided at a slightly high position, and is slightly pressurized to a pump pressure for spraying. It is equipped with a satellite positioning device 280 and responds with automatic driving. A traveling part is the same as the dedicated machine for responding to pests 250.

FIG. 16(A) is during spraying, and FIG. 16(B) is a diagram during charging. A charging part 276 is connected to a power feeding part 278 in a non-contact manner for charging. At this time, disinfectant 277 is supplied.

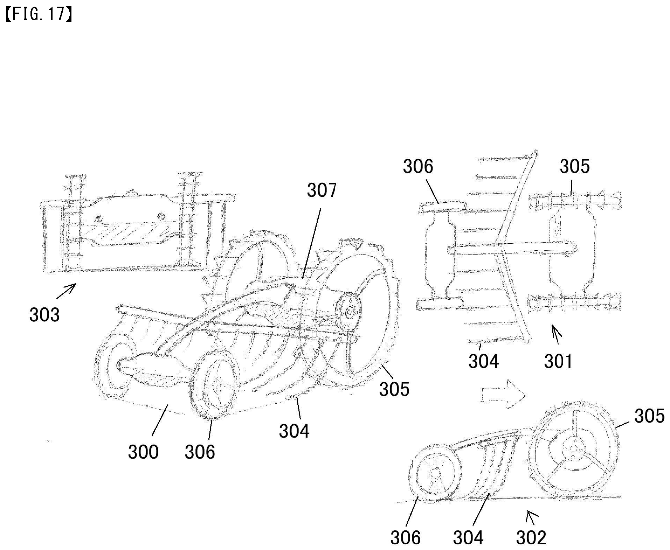

Regarding the weeding response mode of the fourth invention, content utilizing a dedicated machine for responding to weeding 300 in FIG. 17 will be described. Front view 303, top view 301, and side view 302 are shown. The dedicated machine for responding to weeding 300 enables automatic travel by a satellite positioning device 307. Although it is possible to mount a dedicated weeding work machine on the tractor 10 and respond to weeding, if weeds are detected in a paddy field by the tractor 10, it is more effective to detect that position from images, transmit position relationship data to a work vehicle, and perform weeding with the dedicated machine for responding to weeding 300.

This dedicated machine for responding to weeding 300 is equipped with small chains 304 between front wheels 305 and rear wheels 306, and when it travels, the small chains 304 are dragged over an upper mud layer of the paddy field and stir up mud. Not only stirring up mud, weeds already grown in the paddy field are entangled and torn off by the chain part, thereby enabling removal of weeds.

The small chains 304 are arranged in a plurality, positions where rice grows are positions without chains, and rice is protected while only weeds are entangled and removed. Since the front wheels 305 have a larger diameter, entanglement of chains during turning does not occur.

Thus, working by data linkage with the dedicated machine for responding to weeding 300 is effective, and can be responded to as a part of the weeding response mode.

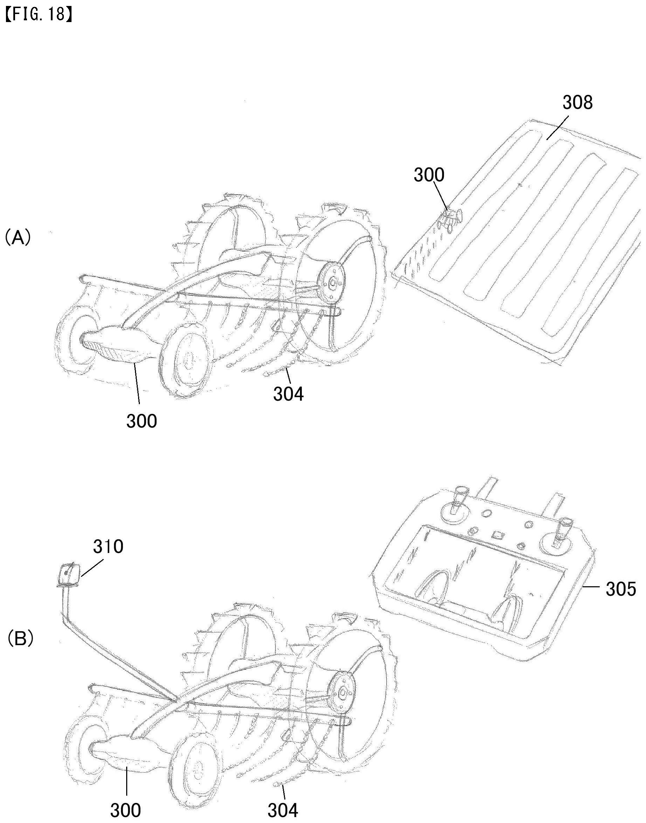

FIG. 18(A) shows a case where weeding response mode for the entire field has been entered regardless of weed detection by the tractor 10. A travel route is taken over the entire field 308, and weeding response is performed with automatic travel.

FIG. 18(B) shows manual operation with an external controller 309. Although weed positions were detected by tractor 10, if weeding work is performed at those positions, weeds like floating weeds may flow into positions where there are no weeds. As a response to this, an imaging device 310 is deployed on the dedicated machine for responding to weeding 300, and weeding work is performed while confirming images by sending these captured images to the external controller 309.

The fifth invention of the present invention will be described.

In input part data 70 of a neural network, which is an example of an embodiment of the present invention, reference image G1, image data at the time of foreign matter detection (images G3 to G3C), work vehicle driving data at the time of detection (each setting and detection data of tractor 10 when images G3 to G3C were captured), and map data of foreign matter detection positions (position information of moving object 60 when images G3 to G3C were captured) are input. Judgment of whether the moving object avoidance mode S78 by the output result data 73 responded correctly is evaluated by content responded to in automatic driving and whether an anomaly did not occur thereafter, or whether there was an element manually changed by a human.

Such a process of detecting an anomaly or making manual changes is judged as an error in judgment criteria or poor accuracy of artificial intelligence judgment, and change contents need to be learned. These anomaly detection data and manual setting change data are added to the input part data 70. By repeating this, the correlation is further enhanced, and it becomes possible to calculate the best output conditions in that field environment.

A learning function part cited as an embodiment is the classification criteria for foreign matter described above. This is improved by a learning function, and classification is performed according to subsequent operation response methods, such as judging a case where there is an obstacle to work and operation is not possible without removing the foreign matter, judging a case where conditional operation is possible, judging a case where normal operation is possible, and a mode for entering the moving object avoidance mode S78 described above, but the reference values thereof are changed.

For example, criteria for judging that operation is not possible without removing foreign matter are improved through learning. If a captured image was judged to be a stone but was actually a black clod of soil, there is no problem in traveling even without removal, so differences between images of stones and clods of soil are learned. In this case, while utilizing a neural network for the state of surface irregularities, the difference from the surrounding color, distance from a ridge, and the like, weighting of color identification is changed and the accuracy of distinguishing between stones and clods of soil is changed, thereby being utilized for the function of learning classification criteria for foreign matter.

### REFERENCE SIGNS LIST

10 Tractor
20 Rice stubble (reference image)
20A Rice stubble (new image)
60 Object (human)
70 Data (input, neural network)
73 Data (output, neural network)
91 Image (synthesis of reference and new)
111 Plant (reference image)
111A Plant (new image)
120 Pest
161 Weed
200 Dedicated machine for responding to moving objects
250 Dedicated machine for responding to pests
300 Dedicated machine for responding to weeding

## Claims

1. A work vehicle capable of detecting a difference between a reference image captured in advance by an imaging device and an image newly captured by the imaging device,
wherein both the reference image and the newly captured image are captured at a same place in a field and oriented toward a same direction,
a portion of the work vehicle is captured in both the reference image and the newly captured image, a reference part of the work vehicle captured in the image is set,
the respective reference parts of the reference image and the newly captured image are overlaid, and
a correction process is performed for matching a scale of a size and an inclination of the work vehicle captured in the images and a hue of the work vehicle captured in the images, thereby enabling detection of a difference between the reference image and the newly captured image.

2. The work vehicle according to claim 1, being able to detect a change between the reference image and the newly captured image,
wherein when a change in size of a predetermined range or more is detected, a part where the change was detected is set as a specific part, the work vehicle is stopped, continuous imaging is performed, and if movement is confirmed in the specific part, a determination to be a moving object is made, and a pre-set moving object avoidance mode is entered.

3. The work vehicle according to claim 1, being able to detect a change between the reference image and the newly captured image,
wherein a growth part of crops in a field is captured, and if a change in hue is detected in the captured growth part, pest damage is determined, and a pre-set pest response mode is entered.

4. The work vehicle according to claim 1, being able to detect a change between the reference image and the newly captured image,
wherein a water surface of a paddy field is captured, and if a change in hue or a change in shape is detected in the captured water surface, weeds are determined, and a pre-set weeding response mode is entered.

5. The work vehicle according to claim 1, being able to detect a change between the reference image and the newly captured image,
wherein difference determination between the reference image and the newly captured image, work vehicle driving data at the time of imaging, and map data of foreign matter detection positions are used as input data, and in a case where an anomaly is detected or manual setting change is performed by control of the work vehicle based on an output result of a neural network, the anomaly detection data or the manual setting change data is added, and a function of learning correlation between input and output of each set of the data is provided.
